# EUROPEAN PATENT APPLICATION

(11) **EP 3 828 593 A1**
(43) Date of publication of application: **02.06.2021**
(21) Application number: 19211604.4
(22) Date of filing: 26.11.2019
(51) Int. Cl.: G01S 13/931, G01S 13/32, G01S 7/00, G01S 13/86, H04W 4/40, H04L 12/701, B60L 53/00, H04W 84/00

(54) **A VEHICLE OFDM RADAR AND COMMUNICATION SYSTEM**

(71) Applicant: Veoneer Sweden AB, 447 37 Vårgårda (SE)
(72) Inventor: Herbertsson, Hans, 447 37 Vårgårda (SE)
(74) Representative: Westpatent AB

(57) **Abstract**

The present disclosure relates to a vehicle radar/communication system (3) comprising an orthogonal frequency division multiplex, OFDM, transceiver device (7), a processing device (40). The processing device (40) is adapted to obtain radar data from the OFDM transceiver device (7), and to process communication received or transmitted via the OFDM transceiver device (7). The processing device (40) is arranged to provide wireless network access by means of OFDM signals (10, 28) for one or more external devices (11, 16) in a wireless communication network (12) via the OFDM transceiver device (7). At least one external device is a fixed communication network node (11, 16, 24).

## Description

### DESCRIPTION OF THE DISCLOSURE

The present disclosure relates to a vehicle radar/communication system comprising an orthogonal frequency division multiplex (OFDM) transceiver device and a processing device adapted to obtain radar data from the OFDM transceiver device.

Many vehicle radar systems comprise means for generating radar signal that are transmitted, reflected and received by means of one or more radar transceivers with appropriate antennas comprised in the radar system.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

There exist different types of radio frequency signals that can be used as radar signals; for example so-called chirp signals are commonly used. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp.

Alternatively, a vehicle radar system can instead use received and transmitted radio frequency signals in the form of orthogonal frequency division multiplex (OFDM) signals. OFDM signals are suitable for use in ranging systems, where they can provide accurate and robust ranging in presence of interference, which is an advantage. Using OFDM also provides improved angular resolution in azimuth and elevation compared with ordinary FMCW radar.

One example of using OFDM for vehicle radar is disclosed in EP 3324201, and using OFDM both for radar and communication between vehicles in an integrated manner has been described in for example CN 105245584 and US 2017310758. However, it is desired to obtain more versatile radar systems using OFDM.

It is an object of the present disclosure to provide vehicle radar systems using OFDM that are more versatile than previously known such radar systems.

This object is obtained by means of a vehicle radar/communication system comprising an orthogonal frequency division multiplex (OFDM) transceiver device and a processing device. The processing device is adapted to obtain radar data from the OFDM transceiver device, and to process communication received or transmitted via the OFDM transceiver device. The processing device is arranged to provide wireless network access by means of OFDM signals for one or more external devices in a wireless communication network via the OFDM transceiver device. At least one external device is a fixed communication network node.

In this way, each radar/communication system comprises a potential transceiver unit that is adapted for an external communication network, such as a 5G mobile network, or future networks, and in that network it can be used as a repeater or local small base station or a small cell site. This will extend coverage out on street level by using vehicles as small cell sites that become a part of a communication network infrastructure, such as a 5G infrastructure.

The radar/communication system 3 comprises hardware that is used both for radar and communication which reduces cost, power consumption, weight and size in a vehicle for OEM's, and also eliminates a potential interference issue.Mobile operators get access to OFDM hardware installed in vehicles that they can use as moving small cell sites providing extended coverage where needed, when needed, significantly limiting other infrastructure investments for the same performance.

According to some aspects, at least one external device either is a fixed communication network node or has an intermediate position between the vehicle radar/communication system and a fixed communication network node.

This means that there can be other nodes, such as mobile nodes or nodes in vehicles, between the vehicle radar/communication system and the fixed node
According to some aspects, the processing device is arranged to provide backhaul by wireless link to one or more fixed communication network nodes that each constitutes a fixed access points.

According to some aspects, the wireless communication network is a 5G 3GPP communication network, and where a mobile external device is in the form of a wireless device, a fixed communication network node is in the form of a RAN (radio access node), that is adapted to communicate via a NR (new radio) air interface and/or an AMF (Core Access and Mobility Management Function), that is adapted to communicate via an N1 interface.

The present disclosure is thus is adapted for an external communication network in the form of a 5G mobile network. All advantages associated with the present disclosure can thus be applied to a 5G mobile network. Furthermore, because of an increased working frequency compared to 4G, 5G results in a reduced range for information transfer. This means that more transmitters and base stations, signal repeaters, are required and could result in prolonged deployment times and spotty coverage, or no coverage in rural areas. 5G waves are also more susceptible to atmospheric interference and weather conditions like rain. All these disadvantages of 5G are counteracted by means of the present disclosure.

It can be appreciated that further future mobile networks will work in even increased frequency bands, where the present disclosure again will alleviate those problems that follow.

According to some aspects, an external device is a vehicle radar/communication system in another vehicle.

This means that communication between vehicle radar/communication systems in different vehicles is possible.

According to some aspects, an external device is a base station, a user device, or a vehicle safety and/or control system.

This means that communication is possible between many types of nodes.

According to some aspects, the vehicle radar/communication system is adapted to operate as a communication repeater, relaying received OFDM signals from one external device to another external device by re-transmission.

In this way, enhanced communication is obtained, for example even if a mobile phone is out of reach for a closest base station.

According to some aspects, the vehicle radar/communication system is mounted to an ego vehicle, where received OFDM signals are intended for a device operated by a person in the ego vehicle.

The vehicle radar/communication system can thus be used for relaying communication to a person in the ego vehicle.

According to some aspects, when OFDM signals are transmitted by the vehicle radar/communication system to an external device for communication purposes, the vehicle radar/communication system is adapted to receive OFDM signals that have been reflected by an object. The processing device is adapted to perform radar processing based on the transmitted OFDM signals and the received reflected OFDM signals.

This means that the payload signals are used for radar detection, i.e. not separate signals for radar and communication.

According to some aspects, the vehicle radar/communication system is adapted to be operative when the vehicle is parked, and externally powered via a power cable. (35). The vehicle radar/communication system is alternatively also adapted to be operative when no communication is received or transmitted via the OFDM transceiver device.

The functionality of the vehicle radar/communication system can thus be maintained when the vehicle is parked and not used. This also means that the transceiver is arranged to transmit auto-generated OFDM signals even when no real data is to be transmitted.

According to some aspects, the vehicle radar/communication system comprises a plurality of antennas that are adapted to provide an omnidirectional coverage.

There are also disclosed herein methods and vehicles associated with the above-mentioned advantages.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic view of a vehicle radar/communication system;
- Figure 3: shows a schematic top view of vehicles communicating;
- Figure 4: shows a schematic top view of a vehicle illustrating different transceiver/antenna positions;
- Figure 5: shows an example computer program product.
- Figure 6: shows a flowchart for methods according to the present disclosure.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

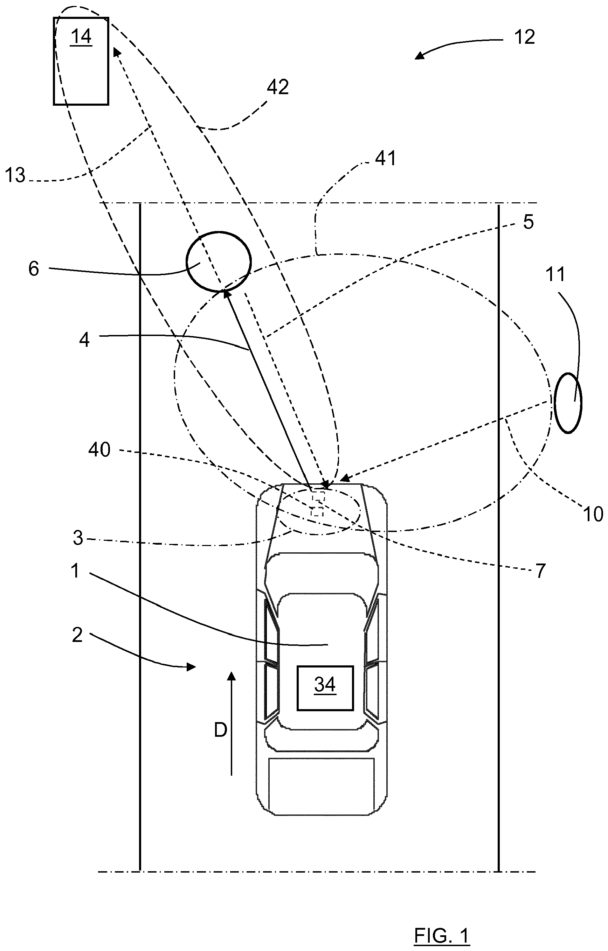

Figure 1 schematically shows a top view of an ego vehicle 1 arranged to run on a road 2 in a direction D, where the ego vehicle 1 comprises a vehicle radar/communication system 3 that is arranged for orthogonal frequency division multiplex (OFDM) signals. The OFDM signals are used to distinguish and/or resolve single targets from the surroundings by transmitting signals 4 and receiving reflected signals 5 and using a Doppler effect in a previously well-known manner. The vehicle radar/communication system 3 is arranged to provide azimuth angles of possible objects 6 by simultaneously sampling and analyzing phase and amplitude of the received signals 5.

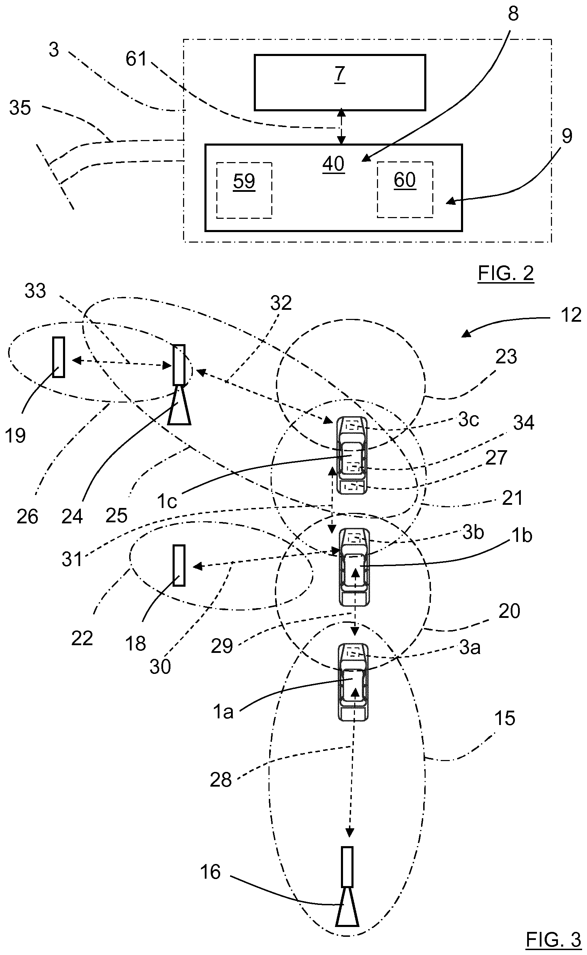

A schematical representation of the vehicle radar/communication system 3 is shown in Figure 2, where the vehicle radar/communication system 3 comprises an OFDM transceiver device 7, and a processing device 40. The processing device 40 is adapted to obtain radar data from the OFDM transceiver device 7, and to process communication received or transmitted via the OFDM transceiver device 7, where such communication can take place between the ego vehicle 1 and other vehicles.

The OFDM transceiver device 7 comprises all necessary components for receiving and transmitting OFDM signal, as well as one or more suitable antenna arrangements, and its operation and necessary components are considered to be well-known for the skilled person. The processing device 40 is considered well-known in the same manner.

According to the present disclosure, the processing device 40 is arranged to provide wireless network access by means of OFDM signals 10, 13 for one or more external devices 11, 14, 16 in a wireless communication network 12 via the OFDM transceiver device 7, where at least one external device is a fixed communication network node 11, 16, 24.

According to some aspects, this means that the vehicle radar/communication system 3 is adapted to receive OFDM signals 10 from a first external device 11 in a wireless communication network 12 and to transmit OFDM signals 13 to an second external device 14 in the wireless communication network 12, where the OFDM signals 10, 13 either are transmitted from, or received at, a fixed communication network node 11. In this context, the term fixed communication network node means a node that is fixed in the wireless communication network 12.

According to some aspects, the first external device 11 is a fixed communication network node 11, such as a base station, that is operating in the wireless communication network 12 and has a fixed position within the wireless communication network 12. As shown in the example in Figure 1, the OFDM signals 10, 13 are either transmitted from, or received at the fixed communication network node 11.

According to some aspects, the second external device 14 is a mobile communication network node 14 that can be in the form of a user device 14 such as a subscriber terminal that can be in the form of a mobile phone, laptop or similar.

According to a particular example, as shown in Figure 1, there is a base station 11 that is the first external device and has a certain base station coverage 41 that does not reach a mobile phone 14 that is the second external device. The vehicle radar/communication system 3 has a vehicle coverage 42 and is within the base station coverage 41, and receives OFDM signals 10 from the base station 11. The radar/communication system 3 then transmits corresponding OFDM signals 13 to the mobile phone 14 that is within the vehicle coverage 42.

In this manner, the base station 11 that is not able to establish sufficient communication with the mobile phone 14 via a direct communication channel, can use the vehicle radar/communication system 3 for relaying signals to the mobile phone 14 such that sufficient communication can be established between the base station 11 and the mobile phone 14.

Even if the base station 11 is able to establish sufficient communication with the mobile phone 14 via a direct communication channel, the communication performance is increased by using the vehicle radar/communication system 3 for relaying signals to the mobile phone 14. This is an important function that is enabled by means of the present disclosure and provides the advantage of enhanced communication even if a mobile phone 14 is out of reach for a closest base station 11.

According to some aspects, an external device can have an intermediate position between the vehicle radar/communication system 3 and a fixed communication network node such that an OFMD signal can be relayed to the vehicle radar/communication system 3 via such an intermediate external device. An example of this will be described later with reference to Figure 3.

According to some aspects, the wireless communication network 12 is a 5G 3GPP network. Then, a mobile external device 14 is in the form of a UE, user equipment, a fixed communication network node 11, 16, 24 is in the form of a RAN, radio access node, that is adapted to communicate via a NR, new radio, air interface and/or an AMF, Core Access and Mobility Management Function, that is adapted to communicate via an N1 interface.

The present disclosure is highly relevant since future needs in C-ITS (Cooperative Intelligent Transport Systems) and CCAM (Cooperative, connected and automated mobility) will call for massive communication needs with low latency, high reliability and high bandwidth, primarily between vehicles, to share for instance sensor data, context and intentions but also with infrastructure.

For 3GPP xG networks to reach the desired high bandwidth and low latency, next generation mobile networks will start using high frequencies which normally results in a reduced range compared to traditional mobile bands, requiring an extended infrastructure far out with good application performance on the roads, resulting in challenging costs and slow build out. By means of the present disclosure, enhanced application coverage and performance is provided. In this context, an application is what normally is called an "App" and relates to application software designed to run on smartphones and other mobile devices.

Vehicle radar sensors that use OFDM signals benefit from technology and components developed for the mobile infrastructure. A mature mass volume technology can thus be reused in an adjacent mass volume market with potential cost advantages. This evolution will also enable the radar sensors with a waveform for communication, and has promises to solve a future potential interference issues between radars with mass volume radar deployments, including possibilities for coordination using similar principles as is already developed for mobile networks. OFDM is a standard already in global use for communication, and today's 3GPP systems already have methods and processes for centralized coordination of a large number of transceivers.

By means of the present disclosure, each radar/communication system 3 comprises a potential transceiver unit that is adapted for an external communication network 12, such as a 5G mobile network, or future networks, and in that network said radar/communication system 3 can be used as a repeater or local small base station, a small cell site, such as for example a nano, pico or femto station, especially an omnidirectional 360 degree antenna coverage is possible by means of a suitable antenna configuration. This will extend coverage out on street level by using vehicles as small cell sites that become a part of a communication network infrastructure, such as a 5G infrastructure.

The radar/communication system 3 comprises hardware that is used both for radar and communication which reduces cost, power consumption, weight and size in a vehicle for OEM's, and also eliminates a potential interference issue.Mobile operators get access to OFDM hardware installed in vehicles that they can use as moving small cell sites providing extended coverage where needed, when needed, significantly limiting other infrastructure investments for the same performance.

Deployment of 5G coverage with high bandwidth where needed is easily achieved using radar coverage around a vehicle as local microcells that can interconnect with each other.

According to some aspects, the received OFDM signals are re-transmitted to another external device in the communication network, the vehicle radar/communication system 3 operating as a repeater device in the wireless communication network 12. This is the case in the example according to Figure 1.

According to some aspects, when the radar/communication system 3 is transmitting OFDM signals, received signals which constitute reflections of the transmitted OFDM signals are used by the radar processing device for radar detection in a conventional manner for OFDM radar. This means that the transmitted OFDM signals used for radar detection are the same as the relayed OFDM signal 13 that are transmitted to the mobile phone 14. Payload signals are thus used as radar signals, where the received reflected signals 5 are easily separated from other received signals 10 since the transmitted signals are unique regarding information content and timing.

This means that the radar/communication system 3 is used in a communication network existing in the present infrastructure, where the communication network comprises fixed communication network nodes that communicate with mobile communication network nodes such as mobile phones etc.

The received OFDM signals 10 from the first external device 11 can either be re-transmitted to another external device 14 as shown, where the external device can be a further relaying device such as a relay station or even another radar/communication system 3 is used in another vehicle. How this can be used will be discussed below. This in turn means that the first external device 11 alternatively can be another vehicle equipped with the vehicle radar/communication system 3 according to the present disclosure.

In accordance with the present disclosure, the vehicle radar/communication system 3 is adapted to handle a communicated OFDM signal that somewhere is transmitted from, or received at, a fixed network device, such as a pico base station or a small cell site, belonging to the communication network 12. It is of course possible that the received OFDM signals 10 from the first external device 11 are intended for the ego vehicle 1 or a driver of the ego vehicle 1.

According to some aspects, OFDM radar hardware available in vehicles is used both for vehicle to vehicle communication as well as for vehicle to 5G mobile networks, and when doing that, the vehicle is converted to a local 5G (XG) base station that can connect to other nodes such as mobile phones, other vehicles and/or other infrastructure nodes.

According to some further aspects, using in-band frequencies enables backhauling, i.e. setting up IP transport connections between sites, by setting up in-band connections between multiple vehicles that function as base stations to provide network coverage over an area where for instance advanced C-ITS services are needed, as a remote street. For example, this means that data transport is provided from a point without fiber presence to a point where fiber connection is available.

According to some aspects, as schematically shown in Figure 3, the range 15 of a fixed communication network node such as a base station 16 is increased by two or more radar/communication systems 3a, 3b, 3c positioned in corresponding vehicles 1a, 1b, 1c, each radar/communication systems 3a, 3b, 3c operating as a repeater device and forwarding OFDM signals 28, 29, 30, 31, 32, 33 to and from the base station 16 and an end user 1c, 18, 19 that can be a vehicle 1c or its driver via a driver's user device, or an external user device 18, 19.

More in detail, for a first information path, the base station 16 having a base station range 15 transmits a message via a first OFDM signal 28, reaching a first radar/communication system 3a, in a first vehicle 1a, having a first range 20. The message is forwarded via a second OFDM signal 29 to a second radar/communication system 3b, in a second vehicle 1b, having a second range 21, being within the first range 20.

For a first information path, the message is then forwarded via a third OFDM signal 30 to a user mobile phone 18 having a mobile phone coverage 22.

For a second and third information path, the message is then forwarded via a fourth OFDM signal 31 to a third radar/communication system 3c, in a third vehicle 1c, having a third range 23, being within the second range 21.

For the second information path, the message has reached its destination that can be a vehicle safety and/or control system 27 in the third vehicle 3c, or a driver of the third vehicle 3c via a user device, such as a mobile phone 34, operated by a person in the vehicle 3c (also indicated for the ego vehicle 1 in Figure 1). Such a safety and/or control system 27 can be adapted for Advanced driver-assistance systems (ADAS) and similar, and there can be a network that exchange control and safety parameter between vehicles by means of transmitted and received messages according to the above.

For the third information path, the message is then forwarded via a fifth OFDM signal 32 to a repeater station 24 having a repeater coverage 25, where the repeater station 24 then forwards the message via a sixth OFDM signal 33 to a user laptop device 19, having a laptop coverage 26.

All information paths are according to some aspects reciprocal, i.e. bi-directional as indicated by the arrows that represent the OFDM signals being directed in both ways.

The ranges and proportions are only of schematic nature and intended to explain this example of the present disclosure without being meant to indicate realistic ranges and distances. The spatial resolution of a radar transceiver, i.e., longitudinal and lateral resolution, may be improved by using a plurality of transmit and/or receive antennas in an antenna array. More antennas in the antenna array often means that resolution in angle is improved.

In Figure 1, there is a vehicle radar/communication system 3 comprising an OFDM transceiver device 7, and a processing device 40. The vehicle radar/communication system 3 may comprise several OFDM transceiver devices, radar processing devices and/or communication processing devices.

The OFDM transceiver device 7 can comprise one or more antennas. For example, by having a suitable set of antennas comprised in a radar/communication system 3 according to the present disclosure, a desired coverage and accompanying range is acquired, for example an omnidirectional coverage. A suitable set of antennas can then be one or more forward-looking antennas, one or more rearward-looking antennas, one or more side-looking antennas as well as one or more corner antennas.

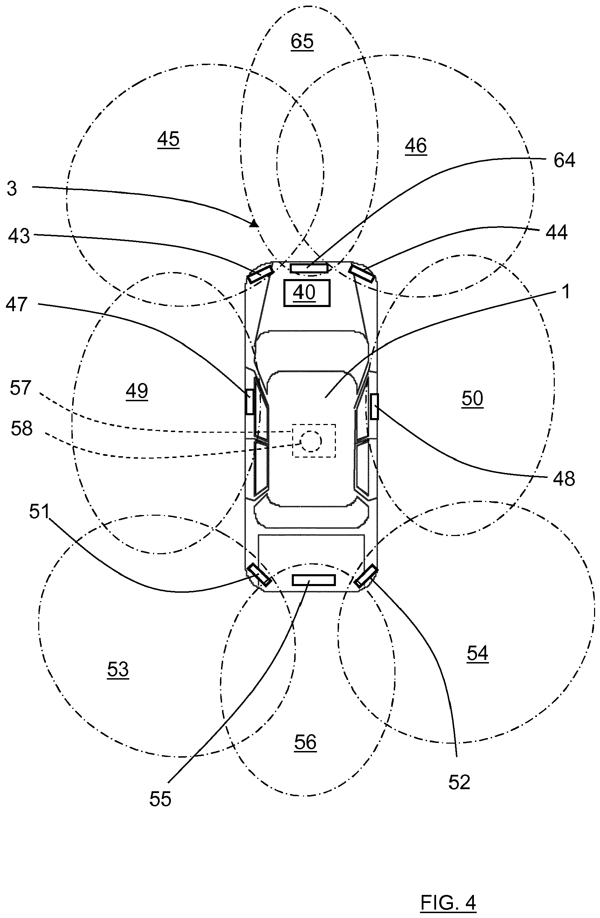

An example is shown in Figure 4 where the vehicle 1 comprises a radar/communication system 3 with a front radar transceiver 64 with an antenna coverage 65, front corner radar transceivers 43, 44 with corresponding antenna coverages 45, 46, side radar transceivers 47, 48 with corresponding antenna coverages 49, 50, rear corner radar transceivers 51, 52 with corresponding antenna coverages 53, 54, and a rear radar transceiver 55 with a corresponding antenna coverage 56. The antenna coverages 45, 46; 49, 50; 53, 54; 56 together provide an omnidirectional coverage.

Figure 4 only illustrates an example, there can of course be more or less radar transceivers.

It is to be noted that there can be one or more radar transceivers that each one comprises one or more separate antennas. This means that in Figure 4, the radar transceivers can instead be separate antennas comprised in one common radar transceiver.

As an alternative, or a complement, the radar/communication system 3 can also comprise a radar transceiver 57 with an omnidirectional antenna 58.

It is also conceivable to have one omnidirectional antenna, for example integrated in the vehicle's roof. According to some aspects, the same antennas are used for radar detection and communication.

Assuming a more or less omnidirectional coverage, using OFDM radars will provide 5G coverage, vehicles equipped with a radar/communication system 3 according to the present disclosure will more or less function as "mobile/moving" small cell sites that communicate with each other, and provide coverage for present and future communications networks and standards where needed and when needed dynamically.

According to some aspects, parked vehicles at for example work sites and living areas can still be working as small base stations, mainly repeaters. In particular, when an electrically powered vehicle is charged, a part of the charging power can be used for the radar/communication system 3. The radar/communication system 3 is then powered via a power cable as schematically indicated in Figure 2.

According to some aspects, it is possible to add the present disclosure to an existing vehicle by adding software to the processing device 40. The processing device 40 is here an existing piece of equipment in a vehicle, and no hardware component need to be changed. It is also possible to change a vehicle assembly process such that a software is changed such that the present disclosure is enabled. It is also conceivable that enhanced memory and processing capability is needed; in this case a hardware upgrade is needed. This may in particular be the case for future communications standards.

The methods and techniques discussed above can be realized in various forms of hardware. Figure 2 schematically illustrates, in terms of a number of functional units, the components of a processing device 40 according to an embodiment of the above discussions. Processing circuitry 59 is provided using any combination of one or more of a suitable central processing unit CPU, multiprocessor, microcontroller, digital signal processor DSP, etc., capable of executing software instructions stored in a computer program product, e.g. in the form of a storage medium 60. The processing circuitry 59 may further be provided as at least one application specific integrated circuit ASIC, or field programmable gate array FPGA.

Particularly, the processing circuitry 59 is configured to cause the processing device 40 to perform a set of operations, or steps. For example, the storage medium 60 may store the set of operations, and the processing circuitry 59 may be configured to retrieve the set of operations from the storage medium 60 to cause the processing device 40 to perform the set of operations. The set of operations may be provided as a set of executable instructions. Thus, the processing circuitry 59 is thereby arranged to execute methods as herein disclosed.

The storage medium 60 may also comprise persistent storage, which, for example, can be any single one or combination of magnetic memory, optical memory, solid state memory or even remotely mounted memory.

The control unit 120 may further comprise a communications interface 61 for communications with at least one external device, such as a radar transceiver 7. As such, the communication interface 61 may comprise one or more transmitters and receivers, comprising analogue and digital components and a suitable number of ports for wireline or wireless communication.

The processing circuitry 59 controls the general operation of the processing device 40 e.g. by sending data and control signals to the communication interface 61 and the storage medium 60, by receiving data and reports from the communication interface 61, and by retrieving data and instructions from the storage medium 60. Other components, as well as the related functionality, of the processing device 40 are omitted in order not to obscure the concepts presented herein.

It should, however, be noted that the processing device 40 is a common multi-purpose processing device 40 that according to some aspects comprises a separate radar processing device 8 and a separate communication processing device 9, or at least functionalities corresponding to a radar processing device 8 and a communication processing device 9. This means that the processing device 40 comprises the necessary functionalities for radar processing and communication processing. The processing device can, on the other hand, be constituted by several separate processing sub-devices.

The processing device 40 is adapted to control obtaining of radar data from an OFDM transceiver device 7, and to process communication received or transmitted via the OFDM transceiver device 7. The processing device 40 is further adapted to provide wireless network access by means of OFDM signals 10, 28 for one or more external devices 11, 16 in a wireless communication network 12 via the OFDM transceiver device 7, where at least one external device is a fixed communication network node 11, 16, 24.

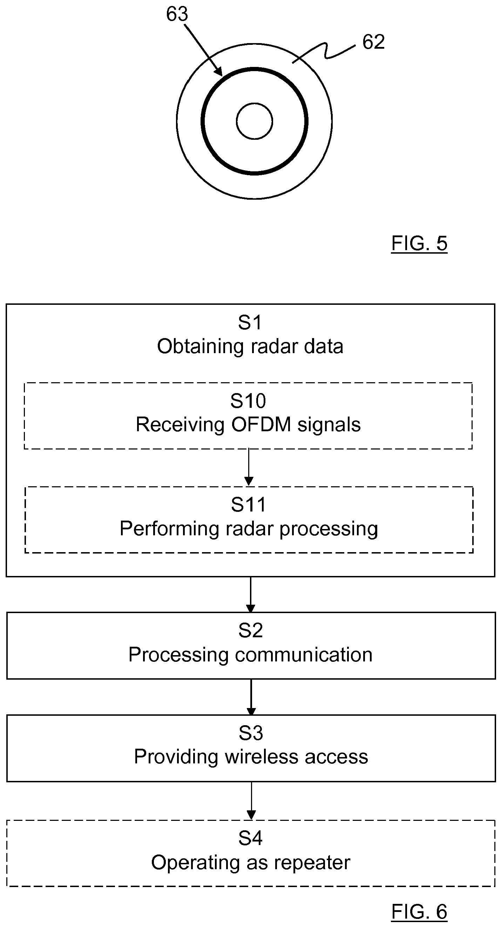

Figure 5 shows a computer program product 62 comprising computer executable instructions 63. The computer executable instructions may, e.g., be executed by a processing device 40 as described above to perform the herein disclosed methods.

With reference to Figure 6, the present disclosure also relates to a method for a vehicle radar/communication system 3, where the method comprises: obtaining S1 radar data from an OFDM transceiver device 7 and processing S2 communication received or transmitted via the OFDM transceiver device 7. The method further comprises providing S3 wireless network access by means of OFDM signals 10, 28 for one or more external devices 11, 16 in a wireless communication network 12 via the OFDM transceiver device 7. At least one external device is a fixed communication network node 11, 16, 24.

According to some aspects, the method comprises operating as a communication repeater, relaying received OFDM signals 10, 13; 28, 29 to an external device 3b, 3c, 3d; 11, 16, 24; 14, 18, 19 by re-transmission.

According to some aspects, when OFDM signals 4, 13 are transmitted for communication purposes, method comprises receiving OFDM signals 5 that have been reflected by an object 6, and performing radar processing based on the transmitted OFDM signals 4, 13 and the received reflected OFDM signals 5.

The present disclosure is not limited to the examples above, but may vary freely within the scope of the appended claims. For example, the vehicle radar system 3 can be implemented in any type of vehicle such as cars, trucks and buses as well as boats and aircraft.

The schematics of the vehicle radar/communication system 3 are simplified, only showing parts that are considered relevant for an adequate description of the present disclosure. It is understood that the general design of an OFDM transceiver, radar processing device and radar processing device of the above types is well-known in the art. The present disclosure lies in using the vehicle radar/communication system 3 both for radar detection and communication in an existing wireless communication network 12, enabling the capacity of the wireless communication network 12 to be increased.

Generally, the present disclosure relates to a vehicle radar/communication system 3 comprising an orthogonal frequency division multiplex (OFDM) transceiver device 7, a processing device 40, where the processing device 40 is adapted to obtain radar data from the OFDM transceiver device 7, and to process communication received or transmitted via the OFDM transceiver device 7, wherein the processing device 40 is arranged to provide wireless network access by means of OFDM signals 10, 28 for one or more external devices 11, 16 in a wireless communication network 12 via the OFDM transceiver device 7, where at least one external device is a fixed communication network node 11, 16, 24.

According to some aspects, at least one external device 11, 16, 24; 14, 3b, 3c either is a fixed communication network node 11, 16, 24, or has an intermediate position between the vehicle radar/communication system 3 and a fixed communication network node 11, 16, 24.

According to some aspects, the processing device 40 is arranged to provide backhaul by wireless link 28 to one or more fixed communication network nodes that each constitutes a fixed access points 16.

According to some aspects, the wireless communication network 12 is a 5G 3GPP communication network, and where a mobile external device is in the form of a wireless device such as a UE (user equipment), a fixed communication network node 11, 16, 24 is in the form of a RAN (radio access node) that is adapted to communicate via an NR (new radio) air interface and/or an AMF (Core Access and Mobility Management Function) that is adapted to communicate via an N1 interface.

According to some aspects, an external device is a vehicle radar/communication system 3b, 3c, 3d in another vehicle 1b, 1c, 1d.

According to some aspects, an external device is a base station 11, 16, 24, a user device 14, 18, 19 or a vehicle safety and/or control system 27.

According to some aspects, the vehicle radar/communication system 3 is adapted to operate as a communication repeater, relaying received OFDM signals 10, 13; 28, 29 from one external device 3b, 3c, 3d; 11, 16, 24; 14, 18, 19 to another external device 3b, 3c, 3d; 11, 16, 24; 14, 18, 19 by re-transmission.

According to some aspects, the vehicle radar/communication system 3 is mounted to an ego vehicle 1, where received OFDM signals 10 are intended for a device 34 operated by a person in the ego vehicle 1.

According to some aspects, when OFDM signals 4, 13 are transmitted by the vehicle radar/communication system 3 to an external device 14 for communication purposes, the vehicle radar/communication system 3 is adapted to receive OFDM signals 5 that have been reflected by an object 6, where the processing device 40 is adapted to perform radar processing based on the transmitted OFDM signals 4, 13 and the received reflected OFDM signals 5.

According to some aspects, the vehicle radar/communication system 3 is adapted to be operative when the vehicle is parked, and externally powered via a power cable 35(35), and/or wherein the vehicle radar/communication system (3) is adapted to be operative when no communication is received or transmitted via the OFDM transceiver device (7).

According to some aspects, the vehicle radar/communication system 3 comprises a plurality of antennas that are adapted to provide an omnidirectional coverage.

The present disclosure also relates to a vehicle 1 comprising a vehicle radar/communication system 3 according to the above.

## Claims

1. A vehicle radar/communication system (3) comprising an orthogonal frequency division multiplex, OFDM, transceiver device (7) and a processing device (40), where the processing device (40) is adapted to obtain radar data from the OFDM transceiver device (7), and to process communication received or transmitted via the OFDM transceiver device (7), wherein the processing device (40) is arranged to provide wireless network access by means of OFDM signals (10, 28) for one or more external devices (11, 16) in a wireless communication network (12) via the OFDM transceiver device (7), where at least one external device is a fixed communication network node (11, 16, 24).

2. The vehicle radar/communication system (3) according to claim 1, wherein at least one external device (11, 16, 24; 14, 3b, 3c) either is a fixed communication network node (11, 16, 24), or has an intermediate position between the vehicle radar/communication system (3) and a fixed communication network node (11, 16, 24).

3. The vehicle radar/communication system (3) according to any one of the claims 1 or 2, wherein the processing device (40) is arranged to provide backhaul by wireless link (28) to one or more fixed communication network nodes that each constitutes a fixed access point (16).

4. The vehicle radar/communication system (3) according to any one of the previous claims, wherein the wireless communication network (12) is a 5G 3GPP communication network, and where a mobile external device is in the form of a wireless device, a fixed communication network node (11, 16, 24) is in the form of a RAN, radio access node, that is adapted to communicate via a NR, new radio, air interface and/or an AMF, Core Access and Mobility Management Function, that is adapted to communicate via an N1 interface.

5. The vehicle radar/communication system (3) according to any one of the previous claims, wherein an external device is a vehicle radar/communication system (3b, 3c, 3d) in another vehicle (1b, 1c, 1d).

6. The vehicle radar/communication system (3) according to any one of the previous claims, wherein an external device is a base station (11, 16, 24), a user device (14, 18, 19) or a vehicle safety and/or control system (27).

7. The vehicle radar/communication system (3) according to any one of the previous claims, wherein the vehicle radar/communication system (3) is adapted to operate as a communication repeater, relaying received OFDM signals (10, 13; 28, 29) from one external device (3b, 3c, 3d; 11, 16, 24; 14, 18, 19) to another external device (3b, 3c, 3d; 11, 16, 24; 14, 18, 19) by re-transmission.

8. The vehicle radar/communication system (3) according to any one of the previous claims, wherein the vehicle radar/communication system (3) is mounted to an ego vehicle (1), where received OFDM signals (10) are intended for a device (34) operated by a person in the ego vehicle (1).

9. The vehicle radar/communication system (3) according to any one of the previous claims, wherein, when OFDM signals (4, 13) are transmitted by the vehicle radar/communication system (3) to an external device (14) for communication purposes, the vehicle radar/communication system (3) is adapted to receive OFDM signals (5) that have been reflected by an object (6), where the processing device (40) is adapted to perform radar processing based on the transmitted OFDM signals (4, 13) and the received reflected OFDM signals (5).

10. The vehicle radar/communication system (3) according to any one of the previous claims, wherein the vehicle radar/communication system (3) is adapted to be operative when the vehicle is parked, and externally powered via a power cable (35), and/or wherein the vehicle radar/communication system (3) is adapted to be operative when no communication is received or transmitted via the OFDM transceiver device (7).

11. The vehicle radar/communication system (3) according to any one of the previous claims, wherein the vehicle radar/communication system (3) comprises a plurality of antennas that are adapted to provide an omnidirectional coverage.

12. A vehicle (1) comprising a vehicle radar/communication system (3) according to any one of the claims 1-11.

13. A method in a vehicle radar/communication system (3), where the method comprises:
obtaining (S1) radar data from an OFDM transceiver device (7),
processing (S2) communication received or transmitted via the OFDM transceiver device (7),
providing (S3) wireless network access by means of OFDM signals (10, 28) for one or more external devices (11, 16) in a wireless communication network (12) via the OFDM transceiver device (7), where at least one external device is a fixed communication network node (11, 16, 24).

14. The method according to claim 13, wherein the method comprises operating (S4) as a communication repeater, relaying received OFDM signals (10, 13; 28, 29) to an external device (3b, 3c, 3d; 11, 16, 24; 14, 18, 19) by re-transmission.

15. The method according to any one of the claims 13 or 14, wherein, when OFDM signals (4, 13) are transmitted for communication purposes, method comprises:
receiving (S10) OFDM signals (5) that have been reflected by an object (6), and
performing (S11) radar processing based on the transmitted OFDM signals (4, 13) and the received reflected OFDM signals (5).
